# EUROPEAN PATENT APPLICATION

(11) **EP 3 097 792 A1**
(43) Date of publication of application: **30.11.2016**
(21) Application number: 14879433.2
(22) Date of filing: 16.12.2014
(51) Int. Cl.: A23N 12/08, A23N 12/10, A23F 5/04

(54) **STIR-FRYER HAVING PYROLYSIS FUNCTION**

(30) Priority: 21.01.2014 KR 20140007203
(71) Applicant: Lee, Younghee, Jeonju-si, Jeollabuk-do 561-807 (KR)
(72) Inventor: Lee, Younghee, Jeonju-si, Jeollabuk-do 561-807 (KR)
(74) Representative: Cabinet Chaillot
(86) International application number: PCT/KR2014/012380
(87) International publication number: WO 2015/111843

(57) **Abstract**

The present invention provides a stir-fryer having a pyrolysis device that can swiftly remove smoke and smells generated during the roasting of coffee bean-like grains. The pyrolysis device includes a heating means that emits heat therefrom; a pyrolysis tube having a hollow portion formed to enclose the heating means and being heated by the heating means, and radiate its heat to the grains; and a pyrolysis space formed between the heating means and the pyrolysis tube in which the organic byproducts enter to be pyrolyzed. The stir-fryer having a pyrolysis device that can roast grains and pyrolyze the unwanted byproducts utilizes energy efficiently.

## Description

### [Field of the invention]

The present invention relates to a pyrolysis device for effectively removing unwanted byproducts, such as smell and smoke, from roasting. Specifically, the present invention relates to a stir-fryer having a pyrolysis device that can roast grains as well as pyrolyze the byproducts from the grain by utilizing energy efficiently.

### [Description of related arts]

Coffee beans, sunflower seeds, barley, sesame seeds, and the like produce a variety of byproducts and vapor when they are roasted. Partial anaerobic conditions during roasting aggravate smoke and smell problems as the roasting proceeds to dry the grains. These smoke and smell are not only harmful to human health but also pollute our environment and are unpleasant. In order to solve these problems, roasters equipped with many types of technologies are sold in the market.

Several different roasting methods, such as direct flame roasting, semi-hot air roasting, and hot air roasting are known. No matter what methods are employed, smoke and smell problems occur inevitably during grain roasting and significant financial costs and efforts are required to solve these problems properly. One of the easiest methods to remove smoke and smells from grain roasting is to install a vent-out unit on the roaster to expel the fumes outside a building. However, this may cause complaints from neighbors. Some roasters are equipped with a cyclonic particle collector and an afterburner which reduces the smoke and smells, but those require lots of space for installing such roasters. In addition to this, the cost for installation and maintenance of the roasters could be high.

Countertop roasters for home roasting usually are not supplied with such functions that can remove smoke and smells, so the user has to open windows to vent them out. It also should be noted that conventional roasters are equipped with a burner that only roasts the grains and a separate afterburner that removes the smoke and smells. Therefore, such roasters are often structurally complicated and have low energy efficiency.

The present invention provides a stir-fryer that can effectively reduce the smoke and smells from roasting and help solve the indoor air pollution problems.

The following patents are known in the art and are incorporated by reference herein: Korean Pat. Nos. 10-0887985; 10-1310881; 10-1199451; 10-1272459; and U.S. Pat. Nos. 4,871,901; 6,382,087 B1; 7,143,686 B1.

### SUMMARY OF THE INVENTION

The object of the present invention is to provide a stir-fryer that can swiftly reduce the smoke and smells from roasting. Another object of the present invention is to provide a stir-fryer having a pyrolysis device that can roast grains as well as pyrolyze the unwanted byproducts by utilizing energy efficiently.

The stir-fryer according to an embodiment of the present invention comprises: a drum having an entrance door for receiving coffee bean-like grains therein and an exit door for releasing the grains out of the drum; a rotating drum disposed inside the drum for holding the grains and rotatably connected to the flat sides of the drum through its horizontal axle; a pyrolysis device installed inside the drum for heating the grains as well as pyrolyzing the organic byproducts introduced therein from the grains; a fan connected to the pyrolysis tube for moving the organic byproducts and vapor into the pyrolysis space and expelling the pyrolyzed gas out of the pyrolysis tube; and a cooling vessel located underneath the drum and adapted for cooling the roasted grains unloaded from the drum.

The pyrolysis device comprises: a heating means that emits heat therefrom; a pyrolysis tube having a hollow portion formed to enclose the heating means, the pyrolysis tube being heated by the heating means and radiates its heat to roast the grains; and a pyrolysis space formed between the heating means and the pyrolysis tube in which the organic byproducts enter to be pyrolyzed.

The drum is an asymmetrical cylinder having the heating means, the pyrolysis tube, and the fan installed on one of its two flat sides. The entrance door, the exit door, and a window for observing the inside of the drum are located on the other flat side of the drum. The rotating drum for holding the grains is connected to both flat sides of the drum. The rotating drum has a mesh cylinder shape and a gear unit with a motor is located on the flat side of the rotating drum.

The heating means emits heat and comprises any source selected from flame generated by the oxidation of fuel or a heater connected to power source. The pyrolysis tube has a hollow tube type structure with a tube inlet formed at one end and an exhaust exit formed at the opposite end.

The heating means is enclosed by the pyrolysis tube. A pyrolysis space is formed between the heating means and the pyrolysis tube. The pyrolysis space and the pyrolysis tube are heated by the heating means. When heated, the pyrolysis tube radiates its heat to the grains to expedite the roasting. The smoke and smells (byproducts) generated during roasting are forced to enter the pyrolysis space to be thermally decomposed. The exhaust exit functions as a passage for the steam and mixed gas in the pyrolysis tube to the outside of the stir-fryer. A catalyst filter that can oxidize the byproducts at temperatures lower than the typical pyrolysis temperature is arranged in the mid section of the pyrolysis tube.

The fan creates a flow of air within the drum by rotating its blades attached to a motor. The outlet of the fan is connected to the pyrolysis tube and forces the vapor and byproducts in the drum to enter the pyrolysis space. The fan also prevents the byproducts from spreading out of the drum by maintaining a lower-than-atmospheric pressure within the drum.

The roasted grains are introduced to the cooling vessel which is connected to the exit door. The grains are rapidly cooled by the cold air moved in from outside through a multitude of perforation holes formed underneath of the cooling vessel.

### BRIEF DESCRIPTION OF THE DRAWINGS

FIG. **1** is a side sectional view showing a stir-fryer **10** according to a first preferred embodiment.
FIG. **2** is a sectional view taken along the line **2-2** of FIG. **1****.**
FIG. **3** is a perspective view of the pyrolysis device **15** and the fan **50.**
FIG. **4** is a plan view showing the flow of gas during the roasting process.
FIG. **5** is a plan view showing the flow of gas during the cooling process.

### DETAILED DESCRIPTION OF THE INVENTION

The objects and features of the present invention will be now made in detail to the preferred embodiments with reference to the attached drawings.

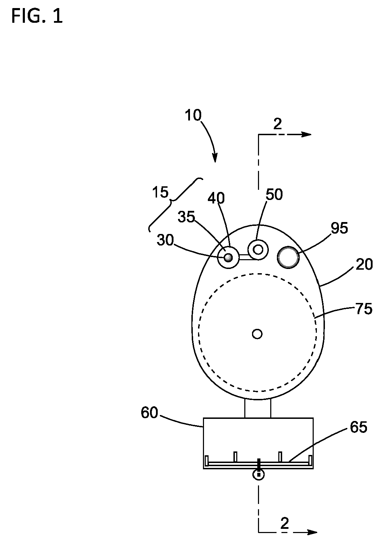

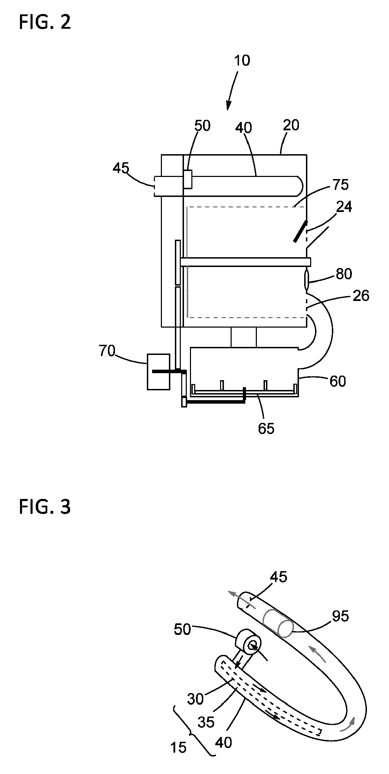

Referring to FIG. **1** and FIG. **2****,** the stir-fryer **10** comprises a drum **20,** a heating means **30,** a pyrolysis tube **40,** a fan **50,** a rotating drum **75,** and a cooling vessel **60.**

The drum **20** is an asymmetrical cylinder having the heating means **30,** the pyrolysis tube **40,** and the fan **50** installed on one of its two flat sides. The entrance door **24** for receiving grains to be roasted, the exit door **26** for releasing the grains **90** out of the drum **20,** and a window **80** for observing the inside of the drum **20** are located on the other flat side of the drum **20.** The rotating drum **75** for holding the grains is connected to both flat sides of the drum **20.** The rotating drum **75** has a mesh cylinder shape through which the air can move out of the rotating drum **75** and the outside air can also move inside the rotating drum **75.**

One of the sides of the rotating drum **75** where the entrance door **24** and the exit door **26** are located is open whereas the opposite side is closed. At least one of the blades (not shown) for mixing the grains throughly are attached to the inside surface of the rotaing drum **75.** A gear unit with a motor **70** is connected to the closed side of the rotating drum **75.**

The heating means **30** comprises any source selected from flame generated by the oxidation of fuel or a heater connected to power source. The pyrolysis tube **40** is located on the same side of the drum **20** as the heating means **30.** The pyrolysis tube **40** has a hollow tube type structure with a tube inlet (not shown) formed at one end and an exhaust exit **45** formed at the opposite end. The heating means **30** is enclosed by the pyrolysis tube **40.** A pyrolysis space **35** is formed between the heating means **30** and the pyrolysis tube **40.** A pyrolysis device **15** includes the heating means **30,** the pyrolysis tube **40,** and the pyrolysis space **35.** The pyrolysis device **15** roasts the grains **90** and pyrolyzes the organic byproducts introduced therein during roasting.

The opposite terminal end of the pyrolysis tube **40** away from the heating means **30** forms the exhaust exit **45** which functions as a passage for the steam and mixed gas in the pyrolysis tube **40** to the outside of the stir-fryer **10.**

The pyrolysis space **35** and the pyrolysis tube **40** are heated by the heating means **30.** The organic byproducts generated during roasting are forced to enter the pyrolysis space **35** to be thermally decomposed. The pyrolysis tube **40** functions as a heat reservoir which encloses the heaing means **30** to store its heat temporarily and releases it to the surroundings. The pyrolysis space **35** can keep its temperature as close as the heating means' temperature and the organic byproducts introduced into the pyrolysis space **35** are pyrolyzed. The heating means **30** and the pyrolysis tube **40** are located at a position higher than the center of the drum **20.**

A catalyst filter **95** that can oxidize the organic byproducts at temperatures lower than the typical pyrolysis temperature is arranged in the mid section of the pyrolysis tube **40.** The rest of the organic byproducts not pyrolyzed while passing through the pyrolysis space **35** are further removed by the catalyst filter **95.** The catalyst filter **95** includes at least one of the coated layers derived from platinum, rhodium, palladium, titanium, manganese, and cobalt for catalyzing oxidation and reduction processes.

The fan **50** is arranged at the side of the drum **20** and connected to the pyrolysis tube **40** near its inlet (not shown). The fan **50** creates a flow of air within the drum **20** by rotating its blades attached to a motor. The outlet of the fan **50** is connected to the pyrolysis tube **40** and forces a part or all of the vapor and byproducts in the drum **20** to enter the pyrolysis space **35.** The fan **50** also prevents the organic byproducts from spreading out of the drum **20** by maintaining a lower-than-atmospheric pressure within the drum **20.**

The cooling vessel **60** located underneath the drum **20** has a vertical cylinder shape. The cooling vessel **60** is connected to the exit door **26** and the roasted grains from the rotating drum **75** are unloaded therein. The grains **90** are rapidly cooled by the cold air withdrawn from outside through a multitude of perforation holes (not shown) formed underneath the cooling vessel **60.** A cooling agitator **65** for cooling the grains **90** throughly and having rotatable blades attached to a vertical axle is installed on the cooling vessel **60.**

FIG. **3** is a perspective view of the pyrolysis device **15** and the fan **50.** Referring to FIG. **3****,** the pyrolysis process of the organic byproducts will be described as follows.

When the heating means **30** emits heat, the temperature of the pyrolysis space **35** and the pyrolysis tube **40** increases. The radiation heat from the pyrolysis tube **40** transmits to the rotating drum **75** and grains **90** therein, which generates the vapor and organic byproducts in the rotating drum **75** rising up through the mesh to the upper region of the drum **20.** The fan **50** withdraws the vapor and organic byproducts and discharges a part or all of them into the pyrolysis space **35.** The organic byproducts undergo thermal decomposition (pyrolysis) in the pyrolysis space **35** maintained at 700°C or higher temperature and become carbon dioxide and water. The mixed gas in the combustion space **35** travels towards the exhaust exit **45** to be vented out of the stir-fryer **10.** The rest of the organic byproducts not pyrolyzed while passing through the pyrolysis space **35** are completely pyrolyzed by the catalyst filter **95** arranged in the middle of the pyrolysis tube **40.**

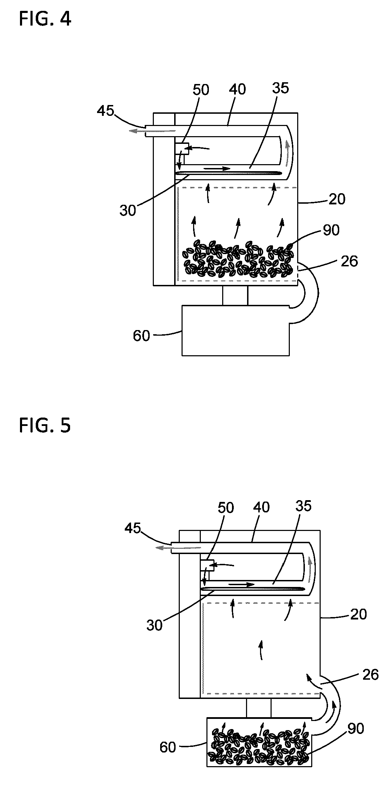

Referring to FIG. **4****,** the flow of gas during the roasting process will be described as follows. The vapor and organic byproducts from the grains **90** heated by the radiation heat of the pyrolysis tube **40** rise up through the mesh to the upper side of the drum **20.** The fan **50** generates a lower-than-atmospheric pressure within the drum **20** and the organic byproducts are sucked into an inlet of the fan **50** without spreading out of the drum **20.** A part or all of the mixed gas withdrawn by the fan **50** are discharged into the pyrolysis space **35,** and the rest of the gas is expelled out to generate air convection in the drum **20.** The fan **50** is connected to the pyrolysis tube **40** near its inlet (not shown), maximizing the contacting distance of the organic byproducts with the heating means **30** to improve the efficiency of the pyrolysis process. The mixed gas free of the organic byproducts is discharged through the exhaust exit **45** outside the stir-fryer **10.**

Referring to FIG. **5****,** the flow of gas during the cooling process will be described as follows. When the temperature of the grains rises to above the preset temperature, the roasting process comes to an end and the cooling process starts. The exit door **26** on the drum **20** opens and the rotation direction of the rotating drum **75** is adjusted to unload the grains **90** to the cooling vessel **60.** The fan **50** continues to operate even after the roasting process is over and the grains **90** are cooled by the ambient air moving into the cooling vessel **60** through the perforation holes. The organic byproducts from the roasted grains **90** are withdrawn into the rotating drum **75** until the cooling process is over. The organic byproducts continue to move up and pass through the mesh towards the upper side of the drum **20.** The organic byproducts forced to move into the pyrolysis space **35** by the fan **50** are pyrolyzed and discharged out through the exhaust exit **45.** When the grains **90** are cooled and the generation of organic byproducts is ceased, the cooling process is terminated by halting the operation of the heating means **30** and the fan **50.**

While the present invention has been particularly shown and described with reference to exemplary embodiments thereof, it will be understood by those of ordinary skill in the art that various changes in form and details may be made therein without departing from the spirit and scope of the present invention as defined by the following claims.

**LIST OF NUMERALS**

| | | | |
|---|---|---|---|
| **10:** | Stir-fryer | **15:** | Pyrolysis device |
| **20:** | Drum | **24:** | Entrance door |
| **26:** | Exit door | **30:** | Heating means |
| **35:** | Pyrolysis space | **40:** | Pyrolysis tube |
| **45:** | Exhaust exit | **50:** | Fan |
| **60:** | Cooling vessel | **65:** | Cooling agitator |
| **70:** | Motor | **75:** | Rotating drum |
| **80:** | Window | **85:** | Agitator |
| **90:** | Grains | **95:** | Catalyst filter |

## Claims

1. A stir-fryer comprising:
a drum having an entrance door for receiving coffee beans therein and an exit door for releasing the grains out of the drum;
a rotating drum disposed inside the drum for holding the grains and rotatably connected to the flat sides of the drum through its horizontal axle;
a pyrolysis device installed inside the drum for heating the grains as well as pyrolyzing the organic byproducts introduced therein from the grains;
the pyrolysis device including:
a heating means that emits heat therefrom;
a pyrolysis tube having a hollow portion formed to enclose the heating means,
the pyrolysis tube being heated by the heating means and radiates its heat to roast the grains; and
a pyrolysis space formed between the heating means and the pyrolysis tube in which the organic byproducts enter to be pyrolyzed;
a fan connected to the pyrolysis tube for moving the organic byproducts and vapor into the pyrolysis space and expelling the pyrolyzed gas out of the pyrolysis tube; and
a cooling vessel located underneath the drum and adapted for cooling the roasted grains unloaded from the drum.

2. The stir-fryer of claim **1,** wherein the heating means comprises any heating source selected from a heater connected to a power source or a flame generated by the oxidation of fuel.

3. The stir-fryer of claim **1,** wherein the fan prevents the organic byproducts and vapor from spreading out of the drum by maintaining a lower-than-atmospheric pressure within the drum.

4. The stir-fryer of claim **1,** wherein the heating means and the pyrolysis tube are located at a position higher than the center of the drum.

5. The stir-fryer of claim **1,** wherein the fan withdraws the organic byproducts and vapor in the drum and discharges a part or all of them into the pyrolysis space. The rest of the gas withdrawn into the fan is expelled out to generate air convection in the drum.

6. The stir-fryer of claim **1,** further comprising a catalyst filter for pyrolyzing any remaining byproducts not pyrolyzed while passing through the pyrolysis space.

7. The stir-fryer of claim **6,** wherein the catalyst filter includes at least one of the coated layers derived from platinum, rhodium, palladium, titanium, manganese, and cobalt for catalyzing oxidation and reduction processes.

8. The stir-fryer of claim **1,** wherein the fan continues to operate even after the roasting process is over, and the organic byproducts from the roasted grains are withdrawn into the rotating drum.

9. The stir-fryer of claim **1,** wherein the pyrolysis tube includes a tube inlet where the heating means are attached and an exhaust exit through which the gas in the pyrolysis space is discharged outside.

10. The stir-fryer of claim **1,** wherein the fan is connected to the pyrolysis tube near its inlet, maximizing the contacting distance of the organic byproducts with the heating means to improve the efficiency of the pyrolysis process.
